(19) Europäisches Patentamt / European Patent Office / Office européen des brevets

(11) **EP 4 251 952 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **21820543.3**

(22) Anmeldetag: **26.11.2021**

(51) Internationale Patentklassifikation (IPC):
**G01C 21/16** (2006.01)   **G01C 25/00** (2006.01)
**G01P 21/00** (2006.01)

(52) Gemeinsame Patentklassifikation (CPC):
**G01P 21/00; G01C 21/188; G01C 25/005**

(86) Internationale Anmeldenummer:
**PCT/EP2021/083161**

(87) Internationale Veröffentlichungsnummer:
**WO 2022/112500 (02.06.2022 Gazette 2022/22)**

(54) **VERFAHREN ZUR ERKENNUNG VON FEHLFUNKTIONEN IN INERTIALMESSEINHEITEN**

METHOD FOR DETECTING MALFUNCTIONS IN INERTIAL MEASUREMENT UNITS

PROCÉDÉ DE DÉTECTION DE DYSFONCTIONNEMENTS DANS DES UNITÉS DE MESURE INERTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2020 DE 102020131669**

(43) Veröffentlichungstag der Anmeldung:
**04.10.2023 Patentblatt 2023/40**

(73) Patentinhaber:
• **Mercedes-Benz Group AG**
  **70372 Stuttgart (DE)**
• **Robert Bosch GmbH**
  **70469 Stuttgart (DE)**

(72) Erfinder:
• **KALKKUHL, Jens**
  **71088 Holzgerlingen (DE)**
• **AJANOVIC, Mustafa**
  **71067 Sindelfingen (DE)**
• **DIGESER, Philipp Alfons**
  **70597 Stuttgart (DE)**

(74) Vertreter: **Liedtke & Partner Patentanwälte**
  **Gerhart-Hauptmann-Straße 10/11**
  **99096 Erfurt (DE)**

(56) Entgegenhaltungen:
EP-A1- 3 006 901     CN-A- 105 550 053
DE-C1- 4 403 190

• **LI BEIBEI ET AL: "An indoor location algorithm based on Kalman filter fusion of ultra-wide band and inertial measurement unit", AIP ADVANCES, AMERICAN INSTITUTE OF PHYSICS, 2 HUNTINGTON QUADRANGLE, MELVILLE, NY 11747, vol. 9, no. 8, 13 August 2019 (2019-08-13), XP012239836, DOI: 10.1063/1.5117341**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Erkennung von Fehlfunktionen in Inertialmesseinheiten gemäß Anspruch 1.

## Hintergrund der Erfindung

Inertialmesseinheiten (Inertial Measurement Units IMU) sind Anordnungen von Akzelerometern und Gyroskopen, die zur Messung der spezifischen Kräfte (specific forces, Beschleunigungen) und Drehgeschwindigkeiten von Körpern im Raum dienen. Als Bezeichnung für die Akzelerometer-Signale hat sich auch in der deutschen Navigations-Literatur der Begriff Specific Forces und das Symbol f etabliert (siehe Literaturstelle 2). Für Gyroskop-Signale wird im Folgenden das Symbol $\omega$ verwendet. Der Begriff Inertialmesseinheit wird im Folgenden durch die Abkürzung IMU repräsentiert. Inertialmesseinheiten finden Anwendung bei der Bestimmung der Lage, Position und Geschwindigkeit von Fahrzeugen insbesondere auch beim automatisierten Fahren. Beispiele für derartige Anwendung der IMU kann man in Literaturstellen (3) bis (6) finden, oder auch in US 9,753,144 B1 (DE 10 2017 102 269 A1).

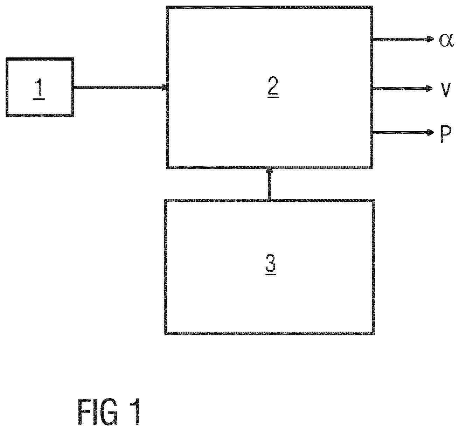

In Figur 1 ist exemplarisch die Anwendung einer Inertialmesseinheit 1 zur Bewegungsschätzung und Navigation gemäß dem Stand der Technik gezeigt. Die Inertialmesseinheit 1 sendet Drehgeschwindigkeits-Signale aus den Gyroskopen und die spezifischen Kraft-Signale aus den Akzelerometern. In einer Sensorfusionseinheit 2 werden durch Integration aus diesen Größen Bewegungsgrößen, beispielsweise Lagewinkel $\alpha$, Geschwindigkeit v und/oder Position P, berechnet und unter Zuhilfenahme weiterer Sensoren 3, beispielsweise Odometer, Magnetometer, barometrische Höhenmesser und/oder GNSS-Empfänger, korrigiert. Für die Sensorfusion wird im Stand der Technik ein Kalmanfilter verwendet.

Inertialmesseinheiten stehen in verschiedenen Qualitätsstufen zur Verfügung. Die Qualität und der Preis werden vor allem durch die verwendete Sensortechnologie bestimmt. Für Serienanwendung in Automobilen kommen vor allem preisgünstige Sensoren, die auf MEMS-Technologie (mikro-elektromechanische Sensoren) basieren, in Frage. Derartige preisgünstige IMU-Sensoren sind in ihrer Genauigkeit durch stochastisches Sensorrauschen und systematische Fehler, wie Bias, Sensitivitätsfehler, Nichtlinearitäten und Ausrichtungsfehler beschränkt. Solche Fehler sind Eigenschaften, die die Sensoren im Normalbetrieb haben. Systematische Fehler müssen durch geeignete Verfahren bestimmt und kompensiert werden, um eine hohe Güte der berechneten Bewegungsgrößen zu erreichen. Beispiele für Kompensationsverfahren findet man in der Fachliteratur oder auch in DE 10 2017 102 269 A1. Die stochastischen und systematischen Fehler eines IMU-Sensors lassen sich durch ein Modell beschreiben. So lässt sich z.B. der vom Sensor gemessene Wert $f_{im}$ einer Specific Force durch das Modell

$$f_{i\mathrm{m}} = \left(1 + s_{fi}\right) \cdot c_i^{\mathrm{T}} \vec{f_i} + b_{fi}(t) + v_i \tag{1}$$

beschreiben, wobei $\vec{f_i}$ der Vektor der wirklichen Specific Force-Komponenten am Messort ist. Die Größe $b_{fi}(t)$ beschreibt einen konstanten oder langsam zeitveränderlichen Bias, die Größe $s_{fi}$ ist der Sensitivitätsfehler des Sensors, die Größe $v_i$ bezeichnet das Sensorrauschen und der Vektor $c_i^{\mathrm{T}}$ beschreibt die Ausrichtung der Sensorachse im Referenzkoordinatensystem. Die Modellparameter lassen sich durch Schätzverfahren bestimmen.

Im Unterschied zu den stochastischen und systematischen Fehlern können IMU-Sensoren auch Fehlfunktionen (englisch: faults) aufweisen. In diesem Fall verliert der Sensor den spezifizierten (und somit per Design vorbestimmten) Zusammenhang zwischen der physikalischen Messgröße und dem ausgegebenen Sensorsignal, so dass ein nicht spezifiziertes Messverhalten eintritt. Damit wird der betroffene IMU-Sensor unbrauchbar.

Fehlfunktionen in den Sensoren, die sich undetektiert in die Bewegungsberechnung oder Navigation fortpflanzen, können dort zu beträchtlichen Fehlern oder grob falschen Werten in den Nutzsignalen führen und stellen daher ein Sicherheitsrisiko in sicherheitsrelevanten Anwendungen dar.

Für Sicherheitskritische Anwendungen wie z.B. automatisches Fahren müssen Sensor-Fehlfunktionen detektiert werden. Der betreffende Fehler muss sodann aus der Navigationslösung eliminiert werden und es muss auf eine Backup-Lösung umgeschaltet werden, um die Vollfunktion des Systems weiter zu gewährleisten (Fehlertolerantes System).

Dies betrifft insbesondere Fehlfunktionen von Sensoren der Inertialmesseinheit.

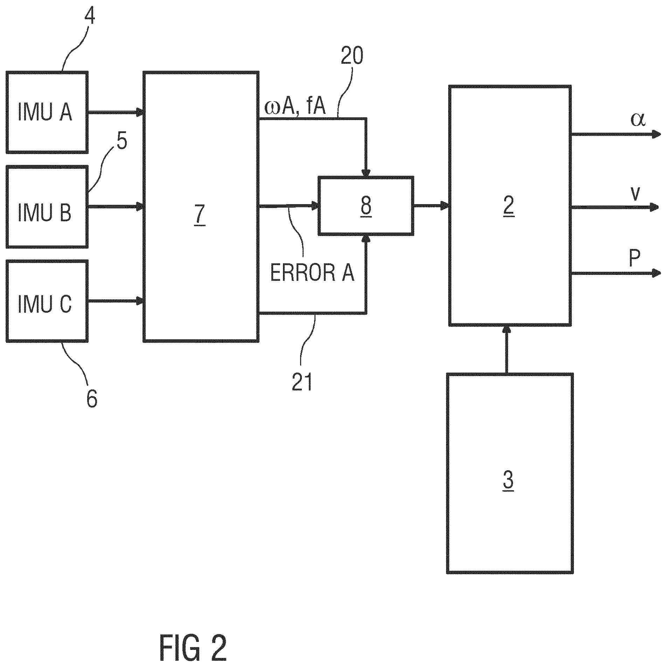

Die entsprechend der Erfindung vorgeschlagene Lösung hierzu ist in Figur 2 gezeigt: Andere Lösungen aus dem Stand der Technik werden im Folgenden diskutiert.

## Stand der Technik

In US 9,568,321 B2 wird die Detektion von Fehlfunktionen in einer einzelnen IMU ohne Redundanz beschrieben. Dabei ist die Detektion in Form eines Health Monitoring Blocks in ein zweifach redundantes Navigationssystem (Inertial Navigation System INS) integriert. Im Health-Monitoring-Block werden die bei der Bewegungsschätzung auftretenden Schätzfehler bewertet. Diese Lösung hat den Nachteil, dass die durch Sensorfehlfunktionen auftretenden Wirkungen auf ein Navigationssystem keinen direkten Rückschluss auf das defekte Sensorelement zulassen. Zudem führt die im INS verwendete Integration der IMU-Signale zu langen Fehlererkennungszeiten. Überdies basiert die Fehlererkennung auf der Verwendung zusätzlicher Sensoren, wie GNSS, Magnetometer, Barometer und Odometer. Diese Sensoren weisen in der Regel eine höhere Fehleranfälligkeit und eine geringere Integrität auf, als die IMU-Sensoren. Fehlfunktionen dieser zusätzlichen Sensoren können in der vorgeschlagenen Anordnung nicht eindeutig von IMU-Fehlfunktionen unterschieden werden. Zusammenfassend kann man schlussfolgern, dass das beschriebene Vorgehen zwar die Detektion einer Fehlfunktion zulässt aber nicht die Identifikation des defekten Sensors. Dies wäre aber die Grundvoraussetzung für fehlertolerantes Systemverhalten.

Die Nachteile des oben beschriebenen Vorgehens sind seit langem bekannt. Nähere Erläuterungen findet man z.B. in (3), Kapitel 17. Dort wird explizit auf die Notwendigkeit redundanter Hardware in sicherheitskritischen INS-Anwendungen hingewiesen.

Der Einsatz redundanter Inertialmesseinheiten IMU ist in der Luftfahrttechnologie Stand der Technik. Hierbei werden Hochleistungs-Inertialmesseinheiten mit identischen Eigenschaften zu einer redundanten Sensorkonfiguration zusammengefügt. Im Stand der Technik ist diesbezüglich zum Beispiel eine Air Data Inertial Reference Unit (ADIRU) bekannt, in der sechs Akzelerometer und sechs Drehgeschwindigkeitssensoren in einer nicht-orthogonalen Geometrie angeordnet sind, die maximale Redundanz mit einer minimalen Anzahl von Sensoren erreicht (Siehe Literaturstellen 1,2).

So wird zum Beispiel für die sechs Specific Force-Signale der Akzelerometer $f_1, ..., f_6$ eine Regressionsgleichung gelöst, um einen resultierenden Vektor der orthogonalen Komponenten $[f_x, f_y, f_z]$ der Specific Force zu erhalten:

$$\begin{bmatrix} f_1 \\ \vdots \\ f_6 \end{bmatrix} = M \cdot \begin{bmatrix} f_x \\ f_y \\ f_z \end{bmatrix} + v \tag{2}$$

wobei M eine Matrix ist, die die Sensorgeometrie beschreibt, und v ein Vektor des Sensorrauschens ist.

Überwachung und Mittelwertbildung können parallel erfolgen, während die Regressionsgleichung gelöst wird. In dem System können bis zu zwei Akzelerometer ausfallen, ohne dass eine Funktionsminderung eintritt. Aus Gründen der funktionalen Sicherheit müssen zumindest vier Sensoren verfügbar sein.

Eine andere Lösung mit zwei INS, deren jeweilige Inertialmesseinheiten um 60° gegeneinander verdreht sind, wird in US 5,184,304 A vorgeschlagen. In dieser Lösung wird die Ausgangsfehlerstatistik der beiden Syteme gegeneinander bewertet und hierdurch der defekte Sensor identifiziert.

Für die Luftfahrt qualifizierte Sensoren insbesondere in nicht-orthogonaler Anordnung benötigen sehr viel Bauraum und eignen sich vom Packaging schlecht für den Einbau im Automobil.

In Automobil-Anwendungen, die viel kostensensibler sind, ist die Verwendung derartiger redundanter, hochwertiger Inertialsensoren auch ökonomisch nicht praktikabel.

Einen Vorschlag zur Anwendung von MEMS-Sensoren in einer mehrfach redundanten Anordnung findet sich in US 8,825,436 B2. Hier dient die Mehrfachanordnung lediglich zur Reduktion des Messrauschens und der systematischen Sensorfehler (Run-to-run Bias und temperaturabhängiges Bias). Eine Strategie zur Detektion und Elimination von Sensor-Fehlfunktionen wird nicht betrachtet.

In (6) wird eine Inertialmesseinheit für die automobile Anwendung mit dreifacher Redundanz beschrieben. Diese hat aber den Nachteil, dass sie in einem Bauelement verbaut ist und somit hinsichtlich Spannungsversorgungsproblemen und Common-Cause-Fehlern nicht ausreichend abgesichert ist.

Ebenfalls aus der Literatur (siehe Literaturstelle 2) bekannt sind Master-Slave-Anordnungen von Inertialmesseinheiten oder Navigationssystemen. Die Grundidee dabei ist, Parameter des Slave-Systems, beispielsweise Ausrichtungswinkel, Offsets usw., auf Basis der Navigationsdaten des Master-Systems unter Verwendung eines Kalman-Filters zu schätzen. Der entsprechende Prozess wird als Transfer Alignment bezeichnet. Dieses Verfahren wird üblicherweise bei Waffensystemen eingesetzt, die Low-Cost-Navigationssyteme enthalten, während ein Leitsystem oder Träger ein hochwertiges Navigationssystem enthält.

In

- A. Kohn et al.: "Fail-operational in safety-related automotive multi-core systems", 10th IEEE International Symposium on Industrial Embedded Systems (SIES), 2015, pp. 1-4,

- T. Ishigooka, S. Honda and H. Takada: "Cost-Effective Redundancy Approach for Fail Operational Autonomous Driving System", 2018 IEEE 21st International Symposium on Real-Time Distributed Computing (ISORC), 2018, pp. 107-115,
- M. Li and L. Eckstein: "Fail-Operational Steer-By-Wire System for Autonomous Vehicles", 2019 IEEE International Conference on Vehicular Electronics and Safety (ICVES), 2019, pp. 1-6, und
- T. Schmid et al.: "A Safety Argumentation for Fail-Operational Automotive Systems in Compliance with ISO 26262",2019 4th International Conference on System Reliability and Safety (ICSRS), 2019, pp. 484-493

werden verschiedene Konzepte für die Fehlertoleranz redundanter Inertialmesseinheiten beschrieben.

EP 3 006 901 A1 beschreibt Systeme und Verfahren zum Erzeugen von zwei unabhängigen unterschiedlichen Lagelösungen, zwei unabhängigen unterschiedlichen Trägheitslösungen oder beiden aus einem verbesserten Navigationsgerät. In einer Ausführungsform umfasst ein Avioniksystem: ein Trägheitsnavigationsgerät, das so konfiguriert ist, dass es einen ersten Satz von Lagelösungen erzeugt; eine Einstellungs- und Referenzeinheit, die so konfiguriert ist, dass sie einen primären Satz von Einstellungslösungen und einen sekundären Satz von Einstellungslösungen erzeugt; und ein Anzeigegerät, das so konfiguriert ist, dass es den ersten Satz von Einstellungslösungen, den primären Satz von Einstellungslösungen und den sekundären Satz von Einstellungslösungen empfängt, wobei, wenn der erste Satz von Einstellungslösungen und der primäre Satz von Einstellungslösungen unterschiedliche Ergebnisse liefern, das Anzeigegerät so konfiguriert ist, dass es ermittelt, ob der erste Satz von Einstellungslösungen oder der primäre Satz von Einstellungslösungen korrekt ist, indem es Unterschiede zwischen den Einstellungslösungen ermittelt und bestimmt, welcher Unterschied unter einem Schwellenwert liegt.

CN 105 550 053 B beschreibt ein Redundanzmanagementverfahren zur Verbesserung der Verfügbarkeit eines auf Überwachungspaaren basierenden fehlertoleranten Systems. Das Verfahren umfasst die Schritte der knoteninternen Abstimmung und Überwachung sowie der Abstimmung und Überwachung auf Knotenebene. Während der knoteninternen Abstimmung und Überwachung sind ein Controller A und ein Controller B durch Vergleich konsistent und Daten des Controllers A werden ausgewählt, um in die Abstimmung und Überwachung auf Knotenebene einzutreten. Während der Abstimmung und Überwachung auf Knotenebene wird aus den Werten von drei Signalen von drei Knoten ein Mittelwert als Referenzwert für die Überwachung ausgewählt, und wenn eine Differenz zwischen zwei anderen nicht mittelwertigen Signalen und einem Mittelwertsignal innerhalb eines Schwellenwertbereichs liegt, dann sind die nicht mittelwertigen Signale normal, andernfalls sind die nicht mittelwertigen Signale fehlerhaft. Gemäß dem Redundanzmanagementverfahren wird die Redundanzverwaltung eines auf Überwachungspaaren basierenden fehlertoleranten Computers mit drei oder zwei Knoten realisiert. Die Glaubwürdigkeit der Systemdaten eines fehlertoleranten Computersystems kann sichergestellt werden. Im Vergleich mit auf Fehlerstille basierender Überwachungspaar-Fehlertoleranz wird die Redundanzverschlechterung des Systems verlangsamt. Ein Backup-Controller kann durch einen Software- und Hardware-Kombinationsmodus als Hauptcontroller neu konfiguriert werden, wenn ein Fehler einmal in einem Knoten auftritt, sodass sichergestellt ist, dass das System nicht beeinträchtigt wird.

## Beschreibung der Erfindung

Der Erfindung liegt die Aufgabe zu Grunde, ein verbessertes Verfahren zur Erkennung von Fehlfunktionen in Inertialmesseinheiten (IMU) anzugeben, die in einem Fahrzeug zur Messung von Winkelgeschwindigkeiten und von Kräften oder Beschleunigungen verwendet werden.

Die Aufgabe wird erfindungsgemäß gelöst durch ein Verfahren mit den Merkmalen des Anspruchs 1.

Vorteilhafte Ausgestaltungen der Erfindung sind Gegenstand der Unteransprüche.

Bei einem erfindungsgemäßen Verfahren zur Erkennung von Fehlfunktionen in Inertialmesseinheiten, die in einem Fahrzeug zur Messung von Winkelgeschwindigkeiten und von Specific Forces verwendet werden, kommen mindestens drei Inertialmesseinheiten mit jeweils mehreren Sensoren, umfassend Akzelerometer und gyroskopische Sensoren, zum Einsatz. Erfindungsgemäß wird eine erste Inertialmesseinheit als Master-Inertialmesseinheit verwendet, wobei eine zweite Inertialmesseinheit und eine dritte Inertialmesseinheit, deren Leistungsfähigkeiten geringer sein können als die der ersten Inertialmesseinheit, als Slave-Inertialmesseinheiten verwendet werden, wobei Messungen der Master-Inertialmesseinheit als Referenzwerte verwendet werden, um Messungen der Slave-Inertialmesseinheiten über Schätzung von Fehlermodell-Parametern (beispielsweise gemäß Gleichung (1)) gegenüber der Master- Inertialmesseinheit zu kompensieren, um auf der Basis der jeweils drei korrespondierenden Sensorsignale durch 2-aus-3-Vergleich eine Fehlfunktion in einem der drei Sensorsignale zu erkennen, wobei diejenige der drei Inertialmesseinheiten als fehlerhaft detektiert wird, deren Sensorsignal einen Abstand vom Median der drei Sensorsignale aufweist, der einen Schwellwert überschreitet, wobei eine Fehlfunktion der Master-Inertialmesseinheit zu einem Umschalten auf die Signale einer der noch funktionstüchtigen Slave-Inertialmesseinheiten unter Berücksichtigung einer vorher berechneten Präkompensation führt.

Allgemein kann diese Verfahrensweise im Sinne einer Mehrheitsentscheidung auch auf mehr als drei Inertialmesseinheiten erweitert werden.

In einer Ausführungsform können die Fehlermodell-Parameter mittels eines Kalman-Filters oder eines Recursive-Least-Squares-Verfahrens geschätzt werden.

In einer Ausführungsform können zur Schätzung der Fehlermodell-Parameter Fehlermodelle verwendet werden, die alle Modellparameter der Slave-Inertialmesseinheiten umfassen, wobei zumindest zeitlich veränderliche relative Sensor-Offsets bezüglich der Master-Inertialmesseinheit online geschätzt werden.

In einer Ausführungsform können die Specific Forces der Master-Inertialmesseinheit auf die Messorte der Slave-Inertialmesseinheiten transformiert werden.

In einer Ausführungsform können die geschätzten Parameter auf zulässige Maximalwerte beschränkt werden.

In einer Ausführungsform können in den Kalmanfiltern geschätzte Kovarianzen der Schätzfehler zur Bewertung von Abweichungen der Sensorsignale bei der Detektion zur Wichtung von Signal-Abweichungen herangezogen werden.

In einer Ausführungsform können alle Sensoren aller Inertialmesseinheiten mittels jeweiliger Filtereinheiten gefiltert und zeitlich synchronisiert werden.

In einer Ausführungsform können die online-geschätzten Fehlermodellparameter zeitlich verzögert auf die Messwerte der Slave-Inertialmesseinheiten angewendet werden.

Erfindungsgemäß werden die Slave-Inertialmesseinheiten unter Verwendung einer Master-Slave-Konfiguration präkompensiert, wobei Zeitverzögerungen auf geschätzte Sensorausgaben angewandt werden, wobei dann, wenn ein Fehler der ersten Inertialmesseinheit innerhalb der Zeitverzögerung erkannt wird, die geschätzten Sensorfehler der Slave-Inertialmesseinheiten auf die Werte am Ausgang der Zeitverzögerung eingefroren werden.

In einer Ausführungsform wird eine Detektionslogik auf die Signale der ersten Inertialmesseinheit und die präkompensierten Signale der Slave-Inertialmesseinheiten angewandt, um das Signal zu detektieren, das am meisten vom Mittelwert oder Median der drei Signale abweicht, wobei dann, wenn eine normalisierte Signal-Differenz zum Mittelwert oder Median den Wert 1 überschreitet, ein Sensorfehler angenommen wird.

Die Erfindung ermöglicht eine fehlertolerante Bestimmung der Bewegungsgrößen eines Fahrzeuges im Falle einer IMU-Fehlfunktion (fail operational) mit Hilfe von 2-aus-3-Voting. Dabei werden keine speziellen Anforderungen an geometrische Anordnung und Sensorgüte gestellt. Vielmehr ist die Erfindung auch auf kostengünstige, heterogene und teilweise im Fahrzeug schon vorhandene IMU-Hardware anwendbar.

Das erfindungsgemäße Verfahren erlaubt die Absicherung der Signale der Master-Inertialmesseinheit gegen Sensorfehler als Maßnahme zur Sicherstellung der Funktionssicherheit (Fail-Operational) der Schätzung der Eigenbewegung eines Fahrzeugs unter Berücksichtigung erhöhter Sicherheitsanforderungen beim automatischen Fahren.

Der Schwerpunkt liegt dabei auf der Nutzung von heterogenen (nicht gleichartigen) und insbesondere an unterschiedlichen Stellen im Fahrzeug eingebauten Inertialmesseinheiten (IMU).

Mit der erfindungsgemäßen Lösung wird Fehlertoleranz (fail-operational) bei der Berechnung von Fahrzeugbewegungsgrößen erzielt. Dabei werden nur geringe Anforderungen an die Bauelemente gestellt. Es kann die vorhandene Infrastruktur des Fahrzeugs (ESP-Sensoren, Fahrwerkssensoren) mit genutzt werden und so eine kostengünstige Lösung erzielt werden.

Ausführungsbeispiele der Erfindung werden im Folgenden anhand von Zeichnungen näher erläutert.

Dabei zeigen:

Fig. 1 eine schematische Ansicht eines typischen Beispiels der Anwendung einer Inertialmesseinheit (IMU) zur Schätzung der Bewegungsgrößen eines Fahrzeugs,

Fig. 2 eine schematische Ansicht eines erfindungsgemäßen Überwachungssystems im Zusammenwirken mit einer Bewegungsgrößen-Schätzung,

Fig. 3 eine schematische Ansicht einer Daten-Vorverarbeitung (Präkompensation) für Drehgeschwindigkeitssensoren,

Fig. 4 eine schematische Ansicht der Daten-Vorverarbeitung (Präkompensation) für Akzelerometer, und

Fig. 5 eine schematische Ansicht einer Fehlerdetektionslogik und einer Entscheidungslogik.

Einander entsprechende Teile sind in allen Figuren mit den gleichen Bezugszeichen versehen.

Bei einem Verfahren zur Erkennung von Fehlfunktionen in Inertialmesseinheiten, die in einem Fahrzeug zur Messung von Winkelgeschwindigkeiten und Specific Forces verwendet werden, kommen mindestens drei Inertialmesseinheiten 4, 5, 6 mit jeweils mehreren Akzelerometern und gyroskopischen Sensoren zum Einsatz entsprechend Figur 2.

Erfindungsgemäß wird eine erste Inertialmesseinheit 4 als Master-Inertialmesseinheit verwendet, wobei eine zweite Inertialmesseinheit 5 und eine dritte Inertialmesseinheit 6, deren Leistungsfähigkeiten geringer sein können als die der ersten Inertialmesseinheit 4, als Slave-Inertialmesseinheiten verwendet werden, wobei in einer Detektionseinheit 7 Messungen der Master-Inertialmesseinheit 4 verwendet werden, um systematische Fehlerparameter in Slave-Inertialmesseinheiten 5, 6 relativ zur Master-Inertialmesseinheit 4 in Modellen zu schätzen und durch 2-aus-3-Vergleich der so kompensierten Signale die Fehlfunktionen von Einzelsensoren zu detektieren. Beim 2-aus-3-Vergleich (two-out-of-three voting) werden die beiden Signale mit der kleinsten Differenz als fehlerfrei bewertet und das dritte Signal gegen diese geprüft. Wird die Differenz des dritten Signals zu den als fehlerfrei bewerteten Signalen zu groß, dann wird eine potentielle Fehlfunktion des betroffenen dritten Signals angenommen.

In den Abbildungen werden die drei Inertialmesseinheiten 4, 5, 6 auch mit IMU A, IMU B, IMU C bezeichnet. Jede von ihnen stellt einen Vektor $\vec{\omega}_{ib}^{b}$ mit drei Winkelgeschwindigkeits-Signalen und einen Vektor $\vec{f}_{ib}^{b}$ mit drei Specific-Force-Signalen bereit. Um die Darstellung dieser Signale zu vereinfachen, werden die Hochstellungen und Tiefstellungen weggelassen. Wir können dann auf die Sensorsignale als $\vec{\omega}_A$, $\vec{\omega}_B$, $\vec{\omega}_C$ bzw. $\vec{f}_A$, $\vec{f}_B$, $\vec{f}_C$ Bezug nehmen.

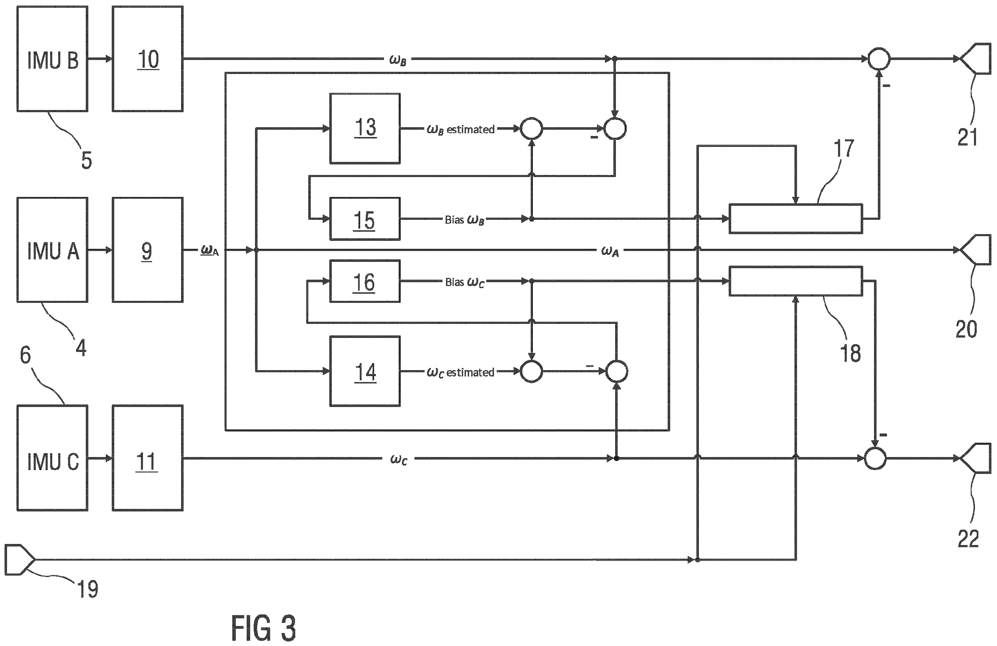

Details der Detektionseinheit 7 sind in den Figuren 3, 4 und 5 dargestellt.

In Figur 3 ist eine Ausführungsform einer Präkompensation der Drehgeschwindigkeitssensoren dargestellt. Dabei sind Filtereinheiten 9, 10 und 11 vorgesehen, durch die Sensor-Signale der Master-Inertialmesseinheit 4 und der beiden Slave-Inertialmesseinheiten 5 und 6 bezüglich bekannter Fehlausrichtung korrigiert, zeit-synchronisiert und gefiltert werden.

Die Zeitsynchronistation ist notwendig, weil in einer heterogenen Anordnung von Inertialmesseinheiten eine Zeitsynchronität der Messwerte nicht vorausgesetzt werden kann. Zum Beispiel können bei der Signalübertragung Unterschiede in den Kommunikations-Latenzen auftreten oder die Vorfilterung der Signale innerhalb der Inertialmesseinheiten 4, 5, 6 unterschiedlich sein.

Danach werden die Parameter der Fehlermodelle der beiden Slave-Inertialmesseinheiten 5, 6 relativ zur Master-Inertialmesseinheit 4 bestimmt. Dies geschieht, indem aus den Daten der Master-Inertialmesseinheit 4 über Fehlermodelle 13 und 14 Sollwerte oder geschätzte Sensorausgaben $\omega_{Bestimated}$, $\omega_{Cestimated}$ für das Verhalten der Slave-IMU-Signale berechnet werden. Die Fehlermodelle 13, 14 umfassen jeweils die Ausrichtung eines einzelnen Drehgeschwindigkeits-Sensors bezüglich des Vektors der Drehgeschwindigkeit $\omega_A$ der Master-Inertialmesseinheit 4. Dies wird beispielsweise während einer End-of-Line-Kalibration bestimmt. Die Abweichungen vom Sollverhalten sind dann auf Sensorfehler in den Slave-Inertialmesseinheit 5, 6 zurückzuführen und werden über Schätzung der Parameter des Fehlermodells korrigiert. In der Ausführungsform von Figur 3 werden lediglich in Schätzer-Blöcken 15 und 16 die Sensor-Bias Bias_$\omega_B$, Bias_wc bestimmt. Es können aber weitere Parameter geschätzt werden, z.B. Bias-Drift, Sensivitätsabweichungen und Fehlausrichtung. Die Parameterschätzung in den Schätzer-Blöcken 15 und 16 kann, wie aus der Literatur bekannt, über rekursive Least Squares-Verfahren oder Kalmanfilter erfolgen. Für normal funktionierende Inertialmesseinheiten 4, 5, 6 ändern sich diese geschätzten Parameter zeitlich nur sehr langsam und bleiben deshalb über einen längeren Zeitraum gültig. Deshalb bleibt die Kompensation der Slave-Inertialmesseinheiten 5, 6 auch richtig wenn sie mit zeitlich verzögerten Fehlerparametern vorgenommen wird. Die entsprechenden Zeitverzögerungs-Blöcke sind mit 17 und 18 gekennzeichnet, wobei die Verzögerungzeit größer sein muss als die Fehlerdetektionszeit der Detektionseinheit 7 und beispielsweise 100 ms beträgt.

Die vorverarbeiteten Signale 20 der Master-Inertialmesseinheit 4 und die korrigierten Signale 21, 22 der beiden Slave-Inertialmesseinheiten 5 und 6 werden dann der Detektionseinheit 7 zur Auswertung zugeführt. Tritt eine Fehlfunktion in der Master-Inertialmesseinheit 4 auf, dann ändern sich die geschätzten Parameter für die Slave-Inertialmesseinheiten 5, 6 sehr stark. Wird diese Fehlfunktion der Master-Inertialmesseinheit 4 jedoch von der Detektionseinheit 7 erkannt, dann wird mit Hilfe der Zeitverzögerungs-Blöcke 17 und 18 verhindert, dass sich die Parameteränderungen auf die Detektion auswirken. Stattdessen werden die Fehlerparameter der Slave-Inertialmesseinheiten 5, 6 auf den jeweils letzten gültigen Wert eingefroren. Auf diese Weise kann eine Entkopplung von Kompensation und Detektion erreicht und Ausfälle der Master-Inertialmesseinheit 4 sicher von Ausfällen der Slave-Inertialmesseinheiten 5, 6 unterschieden werden.

Zusätzlich oder in einer anderen Ausführungsform können die Schätzwerte der Parameter in den Schätzer-Blöcken 15 und 16 auf ihre zulässigen Maximalwerte begrenzt werden, wodurch sich die Sensitivität der Detektion verbessert. Zusätzlich oder in einer anderen Ausführungsform kann das Erreichen oder Überschreiten der zulässigen Maximalwerte durch die geschätzten Parameter zur Fehlerdetektion für den betreffenden Sensor herangezogen werden.

Zusätzlich oder in einer anderen Ausführungsform können in den Schätzer-Blöcken 15, 16 die gewichteten Residuen der Präkompensation berechnet und bewertet werden.

Zusätzlich oder in einer anderen Ausführungsform können die in den Schätzer-Blöcken 15 und 16 berechneten Kovarianzen der Schätzfehler bei der Detektion zur Wichtung der Signal-Abweichungen verwendet werden.

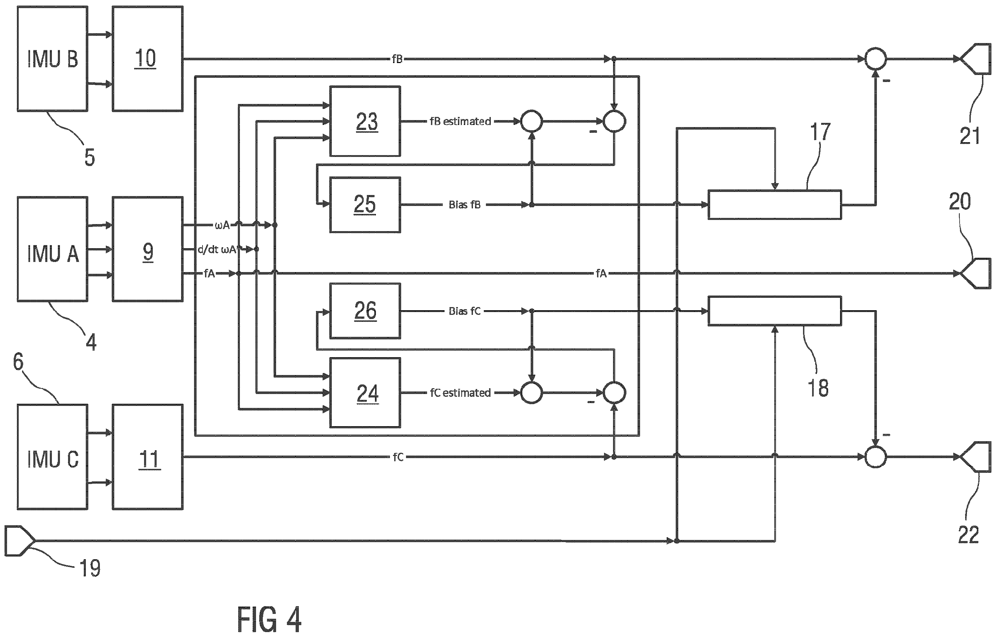

In Figur 4 ist äquivalent zu den Drehgeschwindigkeiten $\omega_A$, $\omega_B$, $\omega_C$ (auch als Winkelgeschwindigkeiten bezeichnet) die Präkompensation der Akzelerometer-Signale (specific forces $f_A$, $f_B$, $f_C$) dargestellt. Sind die drei Inertialmesseinheiten 4, 5, 6 räumlich über das Fahrzeug verteilt, muss im Unterschied zu den Drehgeschwindigkeiten $\omega_A$, $\omega_B$, $\omega_C$ zusätzlich die Ortsabhängigkeit der Specific Forces $f_A$, $f_B$, fc berücksichtigt werden. Dies wird bei Sollwertbildung aus den Signalen der Master-Inertialmesseinheit 4 in Fehlermodellen 23 und 24 realisiert, indem die Specific Forces $f_A$, $f_B$, $f_C$ mit Hilfe der Drehgeschwindigkeiten $\omega_A$, $\omega_B$, $\omega_C$ und Drehbeschleunigungen $d/dt\,\omega_A$, $d/dt\,\omega_B$, $d/dt\,\omega_C$ auf einen Messort $\vec{r}_i$ der jeweiligen Slave-Inertialmesseinheit 5, 6 transformiert werden entsprechend der aus der Literatur bekannten Gleichung

$$\vec{f}_i = \vec{f}_A + \dot{\vec{\omega}}_A \times \vec{r}_i + \vec{\omega}_A \times (\vec{\omega}_A \times \vec{r}_i) \tag{3}$$
$$= \vec{f}_A + \dot{\Omega}_A \vec{r}_i + \Omega_A^2 \vec{r}_i$$

Auf diese Weise werden geschätzte Sensorausgaben $f_{B\_estimated}$, $f_{C\_estimated}$ ermittelt. In der Ausführungsform von Figur 4 werden lediglich in Schätzer-Blöcken 25 und 26 die Sensor-Bias $Bias\_f_B$, $Bias\_fc$ bestimmt. Es können aber weitere Parameter geschätzt werden, z.B. Bias-Drift, Sensitivitätsabweichungen und Fehlausrichtung. Die Parameterschätzung in den Schätzer-Blöcken 25 und 26 kann, wie aus der Literatur bekannt, über rekursive Least Squares-Verfahren oder Kalmanfilter erfolgen.

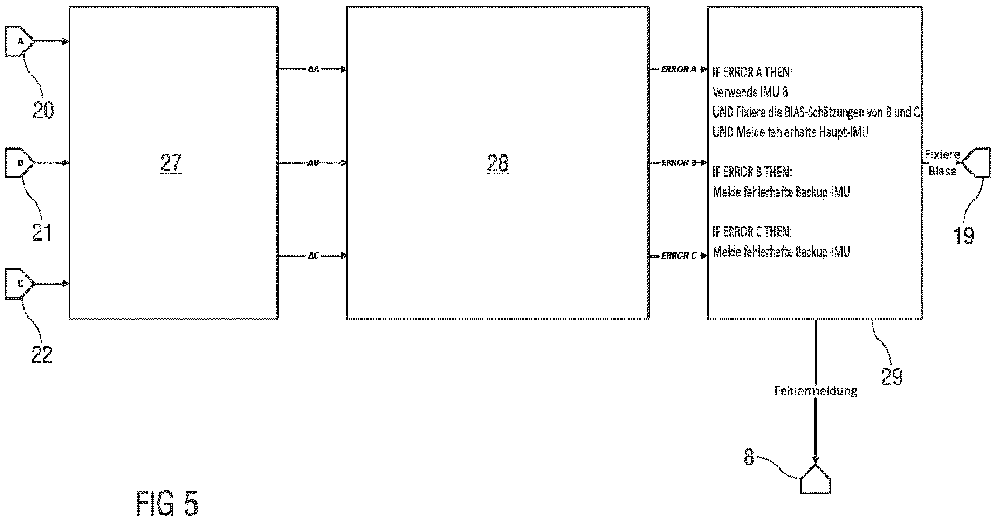

In Figur 5 ist eine Ausführungform der Fehlerdetektion nach dem Prinzip des 2-aus-3-Votings dargestellt. Dabei werden die drei zu vergleichenden, vorverarbeiteten Einzelsignale der Master-Inertialmesseinheit 20 und der beiden Slave-Inertialmesseinheiten 21 und 22 mit A, B und C bezeichnet. Dabei kann A, B und C jeweils eine Drehgeschwindigkeit $\omega_A$, $\omega_B$, $\omega_C$ oder eine Specific Force $f_A$, $f_B$, $f_C$ sein. Insgesamt wird für jeden Freiheitsgrad der Inertialmesseinheiten 4, 5, 6 je eine Detektion verwendet.

Zunächst werden in einem Block 27 die Medianwerte M und D der Signale und ihrer Ableitungen berechnet. Alternativ (und für drei Signale äquivalent hierzu) kann statt des Medianwerts M, D der Mittelwert der zwei Signale verwendet werden, die den minimalen Abstand zueinander haben.

Die Differenz jedes individuellen Signals zum Medianwert M, D wird dann berechnet und gegen einen Schwellwert $S$ normalisiert. Als Schwellwert S wird eine Kombination aus der Varianz $\sigma$ des Signal-Rauschprozesses und einer Komponente T verwendet, die die Unsicherheit der Zeitsynchronisation repräsentiert.

$$M = median\,(A, B, C) \tag{4}$$

$$D = median\,(\dot{A}, \dot{B}, \dot{C}) \tag{5}$$

$$S = 3\sigma + |D|T \tag{6}$$

$$\Delta A = \frac{A-M}{S} \tag{7}$$

$$\Delta B = \frac{B-M}{S} \tag{8}$$

$$\Delta C = \frac{C-M}{S} \tag{9}$$

Wie oben erwähnt können zusätzlich die Standardabweichungen der Schätzfehler der Schätzer-Blöcke 15, 16, 25 und 26 in die Schwellwertbildung einbezogen werden.

In einer Detektionslogik 28 wird geprüft, ob die normalisierte Signal-Differenz $\Delta A$, $\Delta B$, $\Delta C$ zum Median M, D den Wert 1 überschreitet. Ist dies der Fall, dann wird eine Fehlfunktion ERROR A, ERROR B, ERROR C für das betroffene Sensorsignal angenommen.

$$\textbf{IF } |\Delta A| > 1 \textbf{ THEN } \quad ERROR\,A$$
$$\textbf{IF } |\Delta B| > 1 \textbf{ THEN } \quad ERROR\,B$$
$$\textbf{IF } |\Delta C| > 1 \textbf{ THEN } \quad ERROR\,C$$

Das Auftreten einer Fehlfunktion ERROR A, ERROR B, ERROR C in der Master-Inertialmesseinheit 4 wird durch eine Entscheidungslogik 29 über eine Fehlermeldung an einen Umschalter 8 kommuniziert, der dann auf eine der Slave-Inertialmesseinheiten 5, 6 umschaltet. In der in Figur 5 gezeigten Ausführungsform ist das die Slave-Inertialmesseinheit 5.

Dadurch, dass die Fehler-Modell-Parameter der betreffenden Slave-Inertialmesseinheit 5 bezüglich der Master-Inertialmesseinheit 4 bereits bestimmt wurden, ist das Verhalten der kompensierten Slave-Inertialmesseinheit 5 bezüglich Bias, Drift, Sensitivity etc. identisch zur Master-Inertialmesseinheit 4 und in der nachfolgenden Bewegungsberechnung kann ohne Berücksichtigung des Umschaltvorgangs weiter gerechnet werden.

Wie bereits oben beschrieben, muss die Parameterschätzung für die Slave-Inertialmesseinheiten 5, 6 bei einer Fehlfunktion der Master-Inertialmesseinheit 4 abgekoppelt werden. Dies geschieht mit Hilfe eines Signals 19.

Falls eine Fehlfunktion ERROR B, ERROR C in einer der Slave-Inertialmesseinheiten 5, 6 detektiert wird, so wird diese als fehlerhaft gemeldet.

Es wird angestrebt, den optimalen Kompromiss aus Empfindlichkeit gegenüber Sensorfehlern und aus Robustheit gegenüber falsch positiver Detektion infolge von Signalrauschen, Fahrbahnstörungs-Effekten und anderen Unsicherheiten zu finden.

**Zitate enthalten in der Beschreibung**

**Zitierte Patentliteratur**

US 9,568,321 B2
Systems and Methods for Determining Inertial Navigation System Faults
Bharadwaj et al. 02/2017
US 8,065,074 B1
Configurable Inertial Navigation System with Dual Extended Kalman Filter Modes Licardo, 11/2011
US 5,184,304 A
Fault-Tolerant Inertial Navigation System
Huddle 02/1993
US 8,825,436 B2
Inertial Sensing with Spatially Distributed Sensor Array and Two Dimensional Data Processing
Zhang et al. 09/2014
US 9,753,144 B1
Bias and Misalignment Compensation for 6-DOF IMU Using GNSS/INS Data Jafari et al. 05/2017

**Andere Veröffentlichungen**

1. M. L. Sheffels, "A Fault-Tolerant Air Data/Inertial Reference Unit", IEEE AES Systems Magazine, 8840 Evergreen Blvd, MN51-1355, Minneapolis, MN 5543, 1993.; M. D. McIntyre and C. A. Gossett, "The Boeing 777 Fault Tolerant Air Data Inertial Reference System - A New Venture In Working Together", Seattle, WA 98124: Boeing Commercial Airplane Group, 1995
2. Jan Wendel, Integrierte Navigationssysteme, Oldenbourg 2007
3. Paul D. Groves, "Principles of GNSS, Inertial and Multisensor Integrated Navigation Systems", Artech House, Boston, London 2013
4. Willy Klier, Andreas Reim and Dietmar Stapel, Sae Technical Paper Series, No. 2008-01-0582, "Robust Estimation of Vehicle Sideslip Angle an Approach w/o Vehicle and Tire Models", Apr. 14-17, 2008, (7 pages).
5. Andreas Reim, Alexander Steinbach, Oliver Oettgen and Dietmar Stapel, 2009 SAE International, No. 2009-01-0430, "Central Sideslip Angle Estimation on a Software Integration Platform," 2009, (5 pages).
6. http://www.aceinna.com Triple redundant IMU targets autonomous vehicles, 09/2019

Bezugszeichenliste

| 1 | Inertialmesseinheit |
| 2 | Sensorfusionseinheit |
| 3 | weitere Sensoren |
| 4 | Inertialmesseinheit, IMU, Master-Inertialmesseinheit, Master-IMU |
| 5 | Inertialmesseinheit,, IMU, Slave-Inertialmesseinheit, Slave-IMU |
| 6 | Inertialmesseinheit, IMU, Slave-Inertialmesseinheit, Slave-IMU |
| 7 | Detektionseinheit |

| | |
|---|---|
| 8 | Umschalter |
| 9 | Filtereinheit |
| 10 | Filtereinheit |
| 11 | Filtereinheit |
| 13 | Fehlermodell |
| 14 | Fehlermodell |
| 15 | Schätzer-Block |
| 16 | Schätzer-Block |
| 17 | Zeitverzögerungs-Block |
| 18 | Zeitverzögerungs-Block |
| 19 | Signal |
| 20 | vorverarbeitete Signale |
| 21 | korrigierte Signale |
| 22 | korrigierte Signale |
| 23 | Fehlermodell |
| 24 | Fehlermodell |
| 25 | Schätzer-Block |
| 26 | Schätzer-Block |
| 27 | Block |
| 28 | Detektionslogik |
| 29 | Entscheidungslogik |
| A, B, C | vorverarbeitete Einzelsignale |
| Bias_fB, Bias_fC | Sensor-Bias |
| Bias_$\omega$B, Bias_$\omega$C | Sensor-Bias |
| D | Medianwert, Median |
| ERROR A, ERROR B, ERROR C | Fehlfunktion |
| d/dt $\omega$A | Drehbeschleunigung |
| fA, fB, fC | Specific Force |
| fB_estimated, fC_estimated | geschätzte Sensorausgabe |
| IMU A | Inertialmesseinheit, Master-Inertialmesseinheit |
| IMU B | Inertialmesseinheit, Slave-Inertialmesseinheit |
| IMU C | Inertialmesseinheit, Slave-Inertialmesseinheit |
| M | Medianwert, Median |
| P | Position |
| S | Schwellwert |
| T | Komponente |
| v | Geschwindigkeit |
| $\alpha$ | Lagewinkel |
| $\Delta$A, $\Delta$B, $\Delta$C | normalisierte Signal-Differenz |
| $\sigma$ | Varianz |
| $\omega$A, $\omega$B, $\omega$C | Drehgeschwindigkeit, Winkelgeschwindigkeit |
| $\omega$B¬estimated, $\omega$C¬estimated | Sollwert |

**Patentansprüche**

1. Verfahren zur Erkennung von Fehlfunktionen in Inertialmesseinheiten (4, 5, 6), die in einem Fahrzeug zur Messung von Winkelgeschwindigkeiten ($\omega_A$, $\omega_B$, $\omega_C$) und von Specific Forces ($f_A$, $f_B$, fc) verwendet werden, wobei mindestens drei Inertialmesseinheiten (4, 5, 6) mit jeweils mehreren Sensoren, umfassend Akzelerometer und gyroskopische Sensoren, zum Einsatz kommen, wobei eine erste Inertialmesseinheit (4) als Master-Inertialmesseinheit verwendet wird, und wobei eine zweite Inertialmesseinheit (5) und eine dritte Inertialmesseinheit (6), deren Leistungsfähigkeiten geringer sein können als die der ersten Inertialmesseinheit (4), als Slave-Inertialmesseinheiten verwendet werden, wobei Messungen der Master-Inertialmesseinheit (4) als Referenzwerte verwendet werden, um Messungen der Slave-Inertialmesseinheiten (5, 6) über Schätzung von Fehlermodell-Parametern gegenüber der Master-Inertialmesseinheit (4) zu kompensieren, um auf der Basis der jeweils drei korrespondierenden Sensorsignale durch 2-aus-3-Vergleich eine Fehlfunktion in einem der drei Sensorsignale zu erkennen, wobei diejenige der drei Inertialmesseinheiten (4, 5, 6) als fehlerhaft detektiert wird, deren Sensorsignal einen Abstand vom Median (M, D) der drei Sensorsignale aufweist, der einen Schwellwert überschreitet, wobei eine Fehlfunktion der Master-Inertialmesseinheit (4) zu einem Umschalten auf die Signale einer der noch funktionstüchtigen Slave-Inertialmesseinheiten (5, 6) unter Berücksichtigung einer vorher berechneten Präkompensation führt, wobei die Slave-Inertialmesseinheiten (5, 6) unter Verwendung einer Master-Slave-Konfiguration präkompensiert werden, wobei Zeitverzögerungen auf geschätzte Sensorausgaben ($f_{B\_estimated}$, $f_{C\_estimated}$) angewandt werden, wobei dann, wenn ein Fehler der ersten Inertialmesseinheit (4) innerhalb der Zeitverzögerung erkannt wird, die geschätzten Sensorfehler der Slave-Inertialmesseinheiten (5, 6) auf die Werte am Ausgang der Zeitverzögerung eingefroren werden.

2. Verfahren nach Anspruch 1,
   **dadurch gekennzeichnet, dass** die Fehlermodell-Parameter mittels eines Kalman-Filters oder eines Recursive-Least-Squares-Verfahrens geschätzt werden.

3. Verfahren nach einem der Ansprüche 1 oder 2,
   **dadurch gekennzeichnet, dass** zur Schätzung der Fehlermodell-Parameter Fehlermodelle (13, 14, 23, 24) verwendet werden, die alle Modellparameter der Slave-Inertialmesseinheiten (5, 6) umfassen, wobei zumindest zeitlich veränderliche relative Sensor-Offsets bezüglich der Master-Inertialmesseinheit (4) online geschätzt werden.

4. Verfahren nach einem der vorhergehenden Ansprüche,
   **dadurch gekennzeichnet, dass** die Specific Forces ($f_A$, $f_B$, $f_C$ )der Master-Inertialmesseinheit (4) auf die Messorte der Slave-Inertialmesseinheiten (5, 6) transformiert werden.

5. Verfahren nach einem der vorhergehenden Ansprüche 1 bis 3,
   **dadurch gekennzeichnet, dass** die geschätzten Parameter auf zulässige Maximalwerte beschränkt werden.

6. Verfahren nach einem der vorhergehenden Ansprüche,
   **dadurch gekennzeichnet, dass** alle Sensoren aller Inertialmesseinheiten (4, 5, 6) mittels jeweiliger Filtereinheiten (9, 10, 11) gefiltert und zeitlich synchronisiert werden.

7. Verfahren nach einem der vorhergehenden Ansprüche,
   **dadurch gekennzeichnet, dass** die online-geschätzten Fehlermodellparameter zeitlich verzögert auf die Messwerte der Slave-Inertialmesseinheiten (5, 6) angewendet werden.

**Claims**

1. Method for detecting malfunctions in inertial measurement units (4, 5, 6) used in a vehicle for measuring angular velocities ($\omega_A$, $\omega_B$, $\omega_C$) and specific forces ($f_A$, $f_B$, $f_C$), wherein at least three inertial measurement units (4, 5, 6) are used, each having multiple sensors, comprising accelerometers and gyroscopic sensors, wherein a first inertial measurement unit (4) is used as the master inertial measurement unit, and wherein a second inertial measurement unit (5) and a third inertial measurement unit (6), the performance capabilities of which may be lower than those of the first inertial measurement unit (4), are used as slave inertial measurement units, wherein measurements of the master inertial measurement unit (4) are used as reference values in order to compensate measurements of the slave inertial measurement units (5, 6) by estimation of error model parameters compared with the master inertial measurement unit (4), in order to detect a malfunction in one of the three sensor signals on the basis of the respective three corresponding sensor signals by way of 2-out-of-3 comparison, wherein that one of the three inertial measurement units (4, 5, 6) whose sensor signal is at a distance from the median (M, D) of the three sensor signals that exceeds a threshold value is detected as faulty, wherein a malfunction of the master inertial measurement unit (4) leads to a changeover to the signals of one of the still functioning slave inertial measurement units (5, 6) in consideration of a previously calculated precompensation, wherein the slave inertial measurement units (5, 6) are precompensated using a master-slave configuration, wherein time delays are applied to estimated sensor outputs ($f_{B\_estimated}$, $f_{C\_estimated}$), wherein if an error of the first inertial measurement unit (4) is detected within the time delay, the estimated sensor errors of the slave inertial measurement units (5, 6) are frozen to the values at the output of the time delay.

2. Method according to Claim 1,
   **characterized in that** the error model parameters are estimated by means of a Kalman filter or a recursive least squares method.

3. Method according to either of Claims 1 and 2,
   **characterized in that** the error model parameters are estimated using error models (13, 14, 23, 24) that comprise all

**EP 4 251 952 B1**

model parameters of the slave inertial measurement units (5, 6), wherein at least relative sensor offsets with respect to the master inertial measurement unit (4), which vary over time, are estimated online.

4. Method according to one of the preceding claims,
   **characterized in that** the specific forces ($f_A$, $f_B$, $f_C$) of the master inertial measurement unit (4) are transformed to the measuring locations of the slave inertial measurement units (5, 6).

5. Method according to one of preceding Claims 1 to 3,
   **characterized in that** the estimated parameters are limited to maximum permissible values.

6. Method according to one of the preceding claims,
   **characterized in that** all sensors of all inertial measurement units (4, 5, 6) are filtered by means of respective filter units (9, 10, 11) and time-synchronized.

7. Method according to one of the preceding claims,
   **characterized in that** the online-estimated error model parameters are applied to the measured values of the slave inertial measurement units (5, 6) with a time delay.

**Revendications**

1. Procédé de détection de dysfonctionnements dans des unités de mesure inertielles (4, 5, 6) utilisées dans un véhicule pour mesurer des vitesses angulaires ($\omega_A$, $\omega_B$, $\omega_C$) et des forces spécifiques ($f_A$, $f_B$, $f_C$), dans lequel au moins trois unités de mesure inertielles (4, 5, 6) sont utilisées, chacune avec plusieurs capteurs, comprenant des accéléromètres et des capteurs gyroscopiques, une première unité de mesure inertielle (4) étant utilisée en tant qu'unité de mesure inertielle maître, et dans lequel une deuxième unité de mesure inertielle (5) et une troisième unité de mesure inertielle (6), dont les capacités peuvent être inférieures à celles de la première unité de mesure inertielle (4), sont utilisées en tant qu'unités de mesure inertielle esclaves, des mesures de l'unité de mesure inertielle maître (4) étant utilisées comme valeurs de référence pour compenser des mesures des unités de mesure inertielle esclaves (5, 6) par rapport à l'unité de mesure inertielle maître (4) via l'estimation de paramètres de modèle d'erreur, afin de détecter, sur la base de chacun des trois signaux de capteur correspondants, par comparaison 2-parmi-3, un dysfonctionnement dans l'un des trois signaux de capteur, celle des trois unités de mesure inertielle (4, 5, 6) qui présente un écart par rapport à la médiane (M, D) des trois signaux de capteur qui dépasse une valeur seuil étant détectée comme étant défectueuse, un dysfonctionnement de l'unité de mesure inertielle maître (4) entraînant une commutation sur les signaux de l'une des unités de mesure inertielle esclave (5, 6) toujours utilisable en tenant compte d'une précompensation calculée au préalable, les unités de mesure inertielles esclaves (5, 6) étant précompensées en utilisant une configuration maître-esclave, des temporisations étant appliquées à des sorties de capteur estimées ($f_{B\_estimated}$, $f_{C\_estimated}$), de sorte que, si une erreur de la première unité de mesure inertielle (4) est détectée pendant la temporisation, les erreurs de capteur estimées des unités de mesure inertielles esclaves (5, 6) étant gelées aux valeurs en sortie de la temporisation.

2. Procédé selon la revendication 1,
   **caractérisé en ce que** les paramètres du modèle d'erreur sont estimés au moyen d'un filtre de Kalman ou d'une méthode récursive des moindres carrés.

3. Procédé selon l'une des revendications 1 ou 2,
   **caractérisé en ce que**, pour l'estimation des paramètres du modèle d'erreur, des modèles d'erreur (13, 14, 23, 24) sont utilisés, qui comprennent tous les paramètres de modèle des unités de mesure inertielles esclaves (5, 6), des décalages relatifs de capteur au moins variables dans le temps par rapport à l'unité de mesure inertielle maître (4) étant estimés en ligne.

4. Procédé selon l'une des revendications précédentes,
   **caractérisé en ce que** les forces spécifiques ($f_A$, $f_B$, $f_C$) de l'unité de mesure inertielle maître (4) sont transformées sur les emplacements de mesure des unités de mesure inertielle esclaves (5, 6).

5. Procédé selon l'une des revendications 1 à 3,
   **caractérisé en ce que** les paramètres estimés sont limités à des valeurs maximales admissibles.

6. Procédé selon l'une des revendications précédentes,
   **caractérisé en ce que** tous les capteurs de toutes les unités de mesure inertielle (4, 5, 6) sont filtrés et synchronisés dans le temps au moyen d'unités de filtrage respectives (9, 10, 11).

7. Procédé selon l'une des revendications précédentes,
   **caractérisé en ce que** les paramètres du modèle d'erreur estimés en ligne sont appliqués aux valeurs de mesure des unités de mesure inertielles esclaves (5, 6) avec un retard temporel.

FIG 1

FIG 2

FIG 3

FIG 4

A 20
B 21
C 22

27

$\Delta A$
$\Delta B$
$\Delta C$

28

ERROR A
ERROR B
ERROR C

29

IF ERROR A THEN:
Verwende IMU B
UND Fixiere die BIAS-Schätzungen von B und C
UND Melde fehlerhafte Haupt-IMU

IF ERROR B THEN:
Melde fehlerhafte Backup-IMU

IF ERROR C THEN:
Melde fehlerhafte Backup-IMU

Fixiere Biase 19

Fehlermeldung → 8

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 9753144 B1
- DE 102017102269 A1
- US 9568321 B2
- US 5184304 A
- US 8825436 B2
- EP 3006901 A1
- CN 105550053 B
- US 8065074 B1

### In der Beschreibung aufgeführte Nicht-Patentliteratur

- **A. KOHN et al.** Fail-operational in safety-related automotive multi-core systems. *10th IEEE International Symposium on Industrial Embedded Systems (SIES)*, 2015, 1-4
- **T. ISHIGOOKA** ; **S. HONDA** ; **H. TAKADA**. Cost-Effective Redundancy Approach for Fail Operational Autonomous Driving System. *2018 IEEE 21st International Symposium on Real-Time Distributed Computing (ISORC)*, 2018, 107-115
- **M. LI** ; **L. ECKSTEIN**. Fail-Operational Steer-By-Wire System for Autonomous Vehicles. *2019 IEEE International Conference on Vehicular Electronics and Safety (ICVES)*, 2019, 1-6
- **T. SCHMID et al.** A Safety Argumentation for Fail-Operational Automotive Systems in Compliance with ISO 26262. *2019 4th International Conference on System Reliability and Safety (ICSRS)*, 2019, 484-493
- **JAFARI et al.** *Bias and Misalignment Compensation for 6-DOF IMU Using GNSS/INS Data*, May 2017
- **M. L. SHEFFELS**. A Fault-Tolerant Air Data/Inertial Reference Unit. *IEEE AES Systems Magazine*, 1993
- **M. D. MCLNTYRE AND C. A. GOSSETT**. The Boeing 777 Fault Tolerant Air Data Inertial Reference System - A New Venture In Working Together. Boeing Commercial Airplane Group, 1995
- **JAN WENDEL**. Integrierte Navigationssysteme. Oldenbourg, 2007
- **PAUL D. GROVES**. Principles of GNSS, Inertial and Multisensor Integrated Navigation Systems. Artech House, 2013
- **WILLY KLIER** ; **ANDREAS REIM** ; **DIETMAR STAPEL**. Robust Estimation of Vehicle Sideslip Angle an Approach w/o Vehicle and Tire Models. *Sae Technical Paper Series, No. 2008-01-0582*, 2008
- **ANDREAS REIM** ; **ALEXANDER STEINBACH** ; **OLIVER OETTGEN** ; **DIETMAR STAPEL**. Central Sideslip Angle Estimation on a Software Integration Platform. *2009 SAE International, No. 2009-01-0430*, 2009, 5
- *Triple redundant IMU targets autonomous vehicles*, September 2019, http://www.aceinna.com